# DEMANDE DE BREVET EUROPEEN

(11) **EP 1 378 381 A1**
(43) Date de publication de la demande: **07.01.2004**
(21) Numéro de dépôt: 02368069.7
(22) Date de dépôt: 01.07.2002
(51) Int. Cl.: B60F 1/04

(54) **Dispositif de guidage moteur et auto-directeur**

(71) Demandeur: Louveau, Christian, 06390 Coaraze (FR)
(72) Inventeur: Louveau, Christian, 06390 Coaraze (FR)

(57) **Abrégé**

L'invention concerne un dispositif adaptable sur différents véhicules routiers.

Il est composé de deux éléments ferroviaires ou plus implantés à côté des essieux du véhicule routier. Chaque élément est constitué d'un bâti (9) venant s'emboîter sous les longerons du châssis du véhicule. L'essieu (6) des roues ferroviaires (1) est désaxé pour permettre le passage des moteurs rotatifs à fluide (2). Les roues ferroviaires (1) avec leurs moteurs hydrauliques (2) sont montées sur des axes de pivots (3) permettant l'auto-orientation des roues sur les rails et intégrant une suspension hydraulique (4) par roue, en tête de l'axe de pivot (3) liée à une sphère d'azote. Les roues (1) droite et gauche de chaque essieu (6) sont reliées par une barre d'accouplement (7) à mouvements contrôlés (8).

## Description

Les systèmes de guidage actuellement utilisés pour permettre aux véhicules routier de se déplacer sur les voies ferroviaires ne sont pas toujours conformes aux réglementations en vigueur et ne répondent pas forcément aux contraintes liés à leur utilisation sur ces voies ferroviaires en offrant toute la sécurité pour rouler sur rail, passer à une vitesse assez élevée dans les courbes à rayons court et être accepté sur tous les types de voies ferrées.

Les recherches d'antériorité dans ce domaine d'application permettent d'affirmer qu'à ce jour aucune demande de brevets nationaux, européens ou internationaux est concordante avec le dispositif de l'invention décrit ici.

La demande de brevet d'invention n° 95 00181 concerne un type particulier de roue de guidage non motrice par elle-même, non suspendue, non orientable, sans rapport avec l'invention.

Les demandes de brevet d'invention n° 94 09912 et WO 96/05078 concerne un engin railroute pour travaux ferroviaires sans rapport avec le système proposé.

La demande de brevet d'invention n° EP 0 249 816 A2 concerne un boggie de liaison entre deux remorques. Ce boggie n'est pas moteur, ni directeur et pas adaptable sur un camion.

La demande de brevet d'invention n° 79 22869 concerne un système de roulement sur voie ferrée pour un véhicule routier, le système n'est pas motorisé.

La demande de brevet d'invention n° WO 97/21558 concerne un véhicule ferroviaire pour tracter un premier wagon avec transfert de charge sur le tracteur, sans rapport avec le système proposé.

La demande de brevet d'invention n° WO 98/43838 concerne une machine à travailler dotée de roues de guidage. L'avancement est obtenu par les pneumatiques sur les rails.

La demande de brevet d'invention n° WO 99/61266 concerne un agencement pour véhicule composé modules connectés et non intégré au dit véhicule afin d'en disposer sur différents sites éloignés les uns des autres.

La demande de brevet d'invention n° WO 85/01481 concerne un boggie non moteur destiné à être accouplé à un wagon dans son extrémité.

La demande de brevet d'invention n° EP 0 483 651 A1 propose un cadre amovible équipé de quatre roues ferroviaires sans essieu qui transforme un véhicule routier tractable sur rail à vitesse modérée. Le système augmente de façon importante le poids à vide du véhicule et élève la hauteur de chargement.

La demande de brevet d'invention n° 89 05612 concerne un tracteur non porteur railroute pour déplacer sur rails des rames de wagons à vitesse réduite. La motricité des roues ferroviaires est obtenue par frottement des pneumatiques.

La demande de brevet d'invention n° 92 00277 concerne une pelle excavatrice railroute, sans comparaison avec le dispositif proposé.

La demande de brevet d'invention n° 80 11219 propose un tracteur non porteur aux extrémités duquel sont montés des essieux ferroviaires rétractables dont les roues ne sont pas auto-directionnelles.

La demande de brevet d'invention n° 87 05633 propose un système de récupération de la suspension routière lorsque le véhicule se déplace sur rail. Les roues ferroviaires ne sont pas directionnelles.

La demande de brevet d'invention n° 86 16424 décrit un système de guidage pour véhicule routier mais cette formule comporte un cadre en appui sur la partie supérieure du châssis dans sa longueur pourvu de bras à l'extrémité desquels sont disposés des essieux ferroviaires non directionnels dont seulement un essieu est moteur.

Les demandes de brevet d'invention n° EP 0 847 882 A1 et 96 15526 décrivent un véhicule railroute doté d'un système d'enrayage transversal particulier à ce véhicule, mais la circulation se fait par des roues ferroviaires motrices sans axe de pivot d'orientation avec suspension des roues.

La demande de brevet d'invention n° EP 0 887 243 A2 concerne précisément un véhicule de lutte contre l'incendie railroute.

La demande de brevet d'invention n° 94 06404 décrit un dispositif d'entraînement connu pour locotracteur. Le guidage sur rails se fait par des roues ferroviaires non porteuses et donc pas suspendues, ni directionnelles.

La demande de brevet d'invention n° 94 04069 expose un véhicule railroute muni d'essieux ferroviaires moteur non suspendus et non directionnels.

Les demandes de brevet d'invention n° WO 95/13930 et WO 95/29822 concerne des véhicules railroute dont l'entraînement sur rail se fait par les pneumatiques et le guidage par des galets non motorisés. L'absence de suspension des roues ferroviaires est évidente, celles-ci ne supportant pas la masse totale du véhicule. Sans rapport avec le dispositif proposé.

La demande de brevet d'invention n° EP 0 621 166 A1 concerne un tracteur railroute avec transfert de charge pour augmenter l'adhérence de celui-ci. Les roues ferroviaires ne sont pas orientables ni suspendues.

La demande de brevet d'invention n° EP 0 583 001 A1 concerne un locotracteur railroute entraîné par les pneumatiques sur les rails. Sans aucun rapport avec le dispositif proposé.

La demande de brevet d'invention n° EP 0 556 161 A1 se rapporte à un dispositif comportant deux essieux munis de roues ferroviaires non motorisées, non suspendues et non orientables.

La demande de brevet d'invention n° EP 0 023 476 A1 concerne un dispositif railroute par les pneumatiques, seulement sur un essieu du véhicule, donc sans relation avec l'invention

Les demandes de brevet n° 88 00008 et EP 0 323 933 A1 sont relatives à un système de déplacement sur rails composé d'essieux non suspendus, non orientables et non directement moteur.

La demande de brevet d'invention n° EP 0 641 681 A1 concerne un boggie dont les essieux ne sont pas moteur et ne sont pas individuellement orientables, l'intégration permanente sous un châssis de camion est impossible.

La demande de brevet d'invention n° EP 0 648 660 A 1 concerne un dispositif moteur pour déplacer des véhicules à vitesses lentes et manipulé par des utilisateurs à pieds.

La demande de brevet d'invention n° WO 95/09738 concerne un véhicule guidé sur rails dont les essieux railroute sont communs en deux systèmes.

Les demandes 88 07000 - 95 15846 - WO 99/01304 - 97 13603 - EP 0 625 439 A1 - WO 93/24339 - 91 06064 - WO 82/00800 et EP 0 005 578 A1 concernent des systèmes particuliers d'adaptation de remorques routières au transport intermodal.

La demande de brevet FR 2 590 524 A concerne un véhicule disposant d'un seul essieu ferroviaire motorisé limitant les possibilités de traction pour lesquelles il n'a pas été conçu. Les roues ferroviaires ne sont pas directionnelles et n'assurent donc pas une bonne inscription dans les courbes à faible rayon.

Le dépôt de brevet EP O 625 439 A1 concerne un véhicule dont la traction est obtenue par es pneumatiques en contact sur les rails. Cette solution est interdite sur les voies ferrées en exploitation. Il est entièrement différent du dispositif d&fini dans les revendications page 6.

Le brevet US 4 488 494 A est un système adaptable sur un véhicule routier dont la traction sur rail est obtenue par les pneumatiques. Le système ferroviaires n'est pas moteur et est dépourvu de suspensions, les roues ne sont pas directionnelles.

Dans la demande de brevet FR 2 125 321 A, les pneumatiques du véhicule sont en contact avec le rail et assurent la motricité. Les galets de guidage, bien que directionnels, sont de petit diamètre et n'autorisent de déplacement qu'à petite vitesse. L'utilisation des pneumatiques sur rail interdit l'accès aux voies ferrées en exploitation.

Le brevet DE 323 247 C est un système composé de deux bogies de déplacement sur voies ferrées, ni suspendus, ni moteurs. Les roues pneumatiques, non motrices, sont en contact avec le rail. Ce système nécessite un moyen de traction extérieur, voire une traction hippomobile.
Le dispositif suivant l'invention est destiné à rendre plus efficace l'utilisation d'un véhicule routier sur voies ferroviaires. Il est composé de deux ensembles disposés à coté des essieux du véhicule routier. Il est nécessaire que les roues ferroviaires soient toutes motrices, orientables et suspendues indépendamment l'une de l'autre.

Sur les dessins annexés sont données à titre d'exemple non limitatif, les formes de réalisation de l'objet de l'invention :

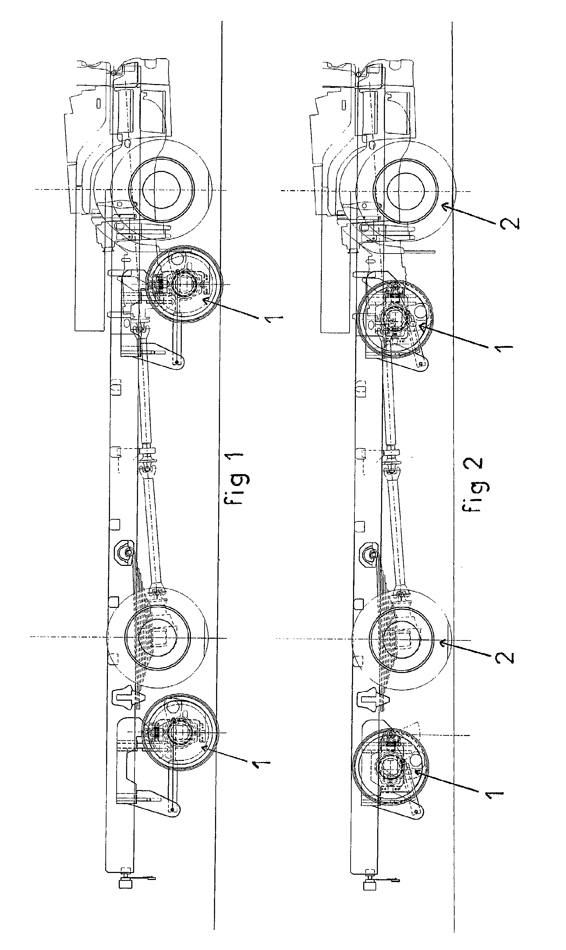

- La figure 1: représente le châssis routier en position rail.
La motricité se fait par les quatre roues ferroviaires (1) supportant l'ensemble du véhicule
- La figure 2: représente le châssis en position route.
Les pneumatiques (2) du véhicule sont en contact sur le sol carrossable, les roues ferroviaires (1) sont relevées, afin de ménager une garde au sol maximale.
- La figure 3: représente un des éléments à positionner sous le châssis du véhicule.
Les roues ferroviaires (1) sont équipées chacune d'un moteur rotatif (2) à flux d'huile. Elles sont montées chacune sur un axe de pivotement (3) qui permet l'orientation de la roue imposée par les courbes de voies. Les axes de pivots de chaque roue sont dotés d'une suspension hydraulique (4) reliée à une sphère d'azote d'amortissement. L'ensemble de chaque axe de pivot suspendu est lui même maintenu par les pièces de désaxement (5) solidaires de 1 'essieu (6) à chaque extrémité de celui-ci. Les deux roues d'un même élément sont reliés entre elles par une barre d'accouplement (7) dotée d'un contrôle de mouvement élastique (8). Cet ensemble d'organes est monté sur un bâti (9) adapté au châssis du véhicule.

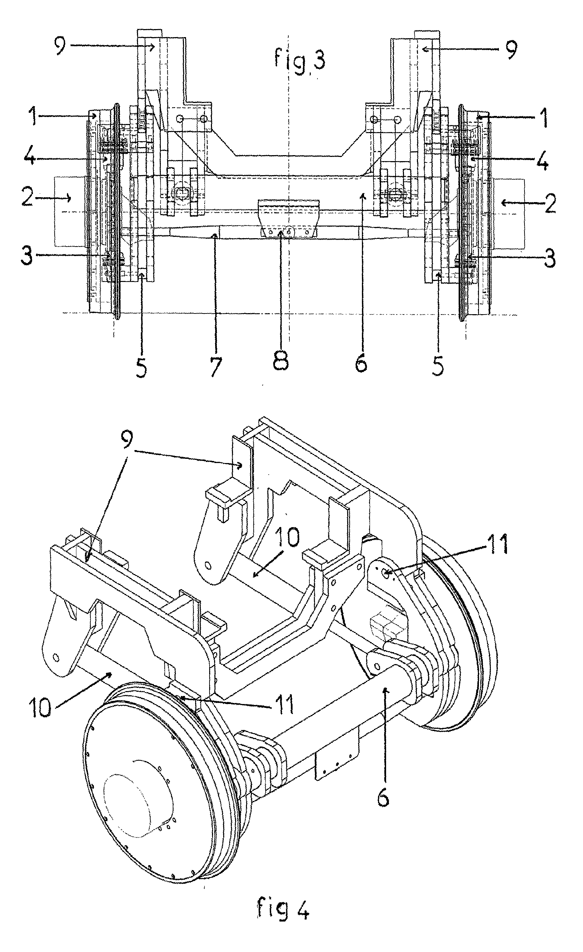

- La figure 4: représente le même élément en trois dimensions en position d'utilisation.
Le bâti (9) destiné à être positionné sous le châssis du véhicule est doté de vérins (10) qui déployés amènent l'essieu (6) en position de déplacement du véhicule sur rails ,en le faisant pivoter sur les axes (11). Le mouvement inversé des vérins ramène l'essieu et les roues ferroviaires en position repos pour l'utilisation du véhicule sur route.

Le dispositif suivant l'invention permet facilement l'accès à toutes les voies ferrées via un chemin carrossable, la mise sur rails étant très pratique grâce à une parfaite visualisation des roues ferroviaires et des rails grâce aux moniteurs vidéos installés dans la cabine et reliés à des caméras correctement positionnées. A partir de là, le véhicule muni des systèmes, objet de l'invention peut se mouvoir sur voies ferrées à grande vitesse pour intervenir là où cela est nécessaire et en toute sécurité grâce aux trois avantages principaux de l'invention :
1- Motricité de toutes les roues de guidage
2- Orientation desdites roues
3- Suspension indépendante desdites roues .

## Revendications

1. Dispositif relatif à un équipement de plusieurs éléments adaptables sur différents types de véhicules routiers pour les rendre utilisables de façon fonctionnelle et sécurisés sur rails, **caractérisé en ce qu'**un des éléments constitué de roue ferroviaire (1) équipée d'un moteur rotatif (2) à flux d'huile. Chaque roue est montée sur un axe de pivotement (3) qui permet l'orientation de la roue imposée par les courbes des voies. L'axe de pivot (3) de chaque roue est doté d'une suspension hydraulique (4) reliée à une sphère d'azote d'amortissement. L'ensemble de chaque axe de pivot (3) à suspension (4) est lui-même maintenu par les pièces de désaxement (5) solidaires de l'essieu (6) à chaque extrémité de celui-ci. Les deux roues d'un même élément sont reliées entre elles par une barre d'accouplement (7) dotée d'un contrôle de mouvement élastique (8). Cet ensemble d'organes est monté sur un bâti (9) adapté au châssis du véhicule.
